(19) Europäisches Patentamt
European Patent Office
Office européen des brevets

(11) Veröffentlichungsnummer: **0 285 965**
**A2**

(12) **EUROPÄISCHE PATENTANMELDUNG**

(21) Anmeldenummer: **88105023.1**

(22) Anmeldetag: **29.03.88**

(51) Int. Cl.$^4$: **C09B 67/22 , C09B 47/04 , C07D 487/22 , G03G 5/06 , //(C07D487/22,259:00,209:00, 209:00,209:00)**

(30) Priorität: **07.04.87 DE 3711762**

(43) Veröffentlichungstag der Anmeldung:
**12.10.88 Patentblatt 88/41**

(84) Benannte Vertragsstaaten:
**CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Albert, Bernhard, Dr.**
**Rietburgstrasse 13**
**D-6701 Maxdorf(DE)**
Erfinder: **Kuppelmaier, Harald, Dr.**
**Kuehler Grund 30 a**
**D-6900 Heidelberg(DE)**
Erfinder: **Wagenblast, Gerhard, Dr.**
**Hanns-Fay-Strasse 3**
**D-6710 Frankenthal(DE)**

(54) **Gemischte Phthalo-naphthalocyanine sowie dünne strahlungsempfindliche Beschichtungsfilme, die diese Verbindungen enthalten.**

(57) Die Erfindung betrifft neue gegebenenfalls substituierte gemischte Phthalo-naphthalocyanine, die 1 bis 3 benzoanellierte Isoindoluntereinheiten aufweisen, sowie dünne strahlungsempfindliche Beschichtungsfilme, enthaltend einen Träger und eine gegenüber Strahlung empfindliche Schicht, die die neuen Verbindungen enthält.

EP 0 285 965 A2

Xerox Copy Centre

# Gemischte Phthalo-naphthalocyanine sowie dünne strahlungsempfindliche Beschichtungsfilme, die diese Verbindungen enthalten

Die vorliegende Erfindung betrifft neue gemischte Phthalo-naphthalocyanine, die 1 bis 3 benzoanellierte Isoindoluntereinheiten aufweisen, sowie dünne strahlungsempfindliche Beschichtungsfilme, enthaltend einen Träger und eine gegenüber Strahlung empfindliche Schicht, die die neuen Verbindungen enthält.

Aufzeichnungsmaterialien, die mit Strahlen hoher Energiedichte, z.B. Laserlicht, eine lokal begrenzte Zustandsänderung erfahren, sind bekannt. Mit dieser thermisch ausgelösten Zustandsänderung, z.B. Verdampfen, Änderung des Fließverhaltens oder Ausbleichen, ist eine Änderung der optischen Eigenschaften, z.B. der Reflexion oder der Absorption durch Änderung des Absorptionsmaximums oder der Extinktion, verbunden, welche zur Informations-oder Datenaufzeichnung ausgenutzt werden kann.

Als Lichtquelle für ein optisches Aufnahmesystem eignen sich beispielsweise Halbleiterlaser, die Licht im nahen Infrarot emittieren. Festkörper-Injektionslaser, vor allem der AlGaAs-Laser, der im Wellenlängenbereich zwischen etwa 700 und 850 nm arbeitet, sind hierbei besonders zu nennen. Daher besteht besonders Interesse an solchen Aufzeichnungsmaterialien, die Strahlung im Wellenlängenbereich zwischen ca. 700 und 850 nm absorbieren und sich zu dünnen, homogenen Schichten verarbeiten lassen.

Zu den strahlungsempfindlichen Stoffen, die in optischen Aufzeichnungssystemen Verwendung finden, gehören auch IR-Farbstoffe. So sind z.B. optische Speichersysteme bekannt, die als strahlungsempfindliche Komponenten Phthalocyanine oder Naphthalocyanine enthalten (DE-A-3 652 590, EP-A 13 453, EP-A 203 826, US-A 4 458 004, US-A 4 492 750, JP-A 82 093/1982 oder JP-A 35 545/1985).

Aufgabe der vorliegenden Erfindung war es, neue strahlungsempfindliche Verbindungen bereitzustellen, die im Wellenlängenbereich der verwendeten Halbleiterlaser eine gute Reflektivität und eine hohe Absorption aufweisen. Der Erfindung lag weiterhin die Aufgabe zugrunde, neue strahlungsempfindliche Beschichtungsfilme bereitzustellen, wobei die die neuen Verbindungen enthaltenden Schichten homogen sein, eine gute Haftung auf den gebräuchlichen Trägermaterialien aufweisen und über einen langen Zeitraum hinweg stabil sein sollten.

Es wurden nun neue gemischte Phthalo-naphthalocyanine der Formel I

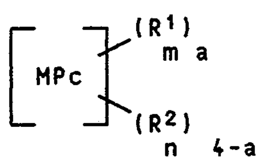

(I)

gefunden, in der

Pc einen Phthalocyaninrest, in dem 1 bis 3 Isoindoluntereinheiten benzoanelliert sind,

M Kupfer, Nickel, Mangan, Eisen, Zink, Blei, Wismut, zweimal Wasserstoff oder die Reste ClAl, $Cl_2Si$ oder VO,

$R^1$ einen Substituenten an einer nicht benzoanellierten Isoindoluntereinheit,

$R^2$ einen Substituenten an einer benzoanellierten Isoindoluntereinheit, wobei $R^1$ und $R^2$ gleich oder verschieden sind und jeweils unabhängig voneinander für $C_1$-$C_{20}$-Alkyl, in dem die Alkylkette gegebenenfalls durch ein oder mehrere Sauerstoffatome unterbrochen ist, gegebenenfalls substituiertes Phenyl, $C_1$-$C_{20}$-Alkoxy, Halogen oder den Rest Si($C_1$-$C_6$-Alkyl)$_3$ stehen,

a die Anzahl der nicht benzoanellierten Isoindoluntereinheiten, wobei a für 1 bis 3 steht,

m die Anzahl der Substituenten $R^1$ jeweils an einer nicht benzoanellierten Isoindoluntereinheit, wobei m für 0 bis 4 steht, und

n die Anzahl der Substituenten $R^2$ jeweils an einer benzoanellierten Isoindoluntereinheit, wobei n für 0 bis 6 steht, bedeuten.

Die neuen gemischten Phthalo-naphthalocyanine eignen sich in vorteilhafter Weise als strahlungsempfindliche Komponenten in dünnen strahlungsempfindlichen Beschichtungsfilmen.

Alle in den obengenannten Resten auftretenden Alkylgruppen können sowohl geradkettig als auch verzweigt sein.

$R^1$ und $R^2$ in Formel I bedeuten beispielsweise $C_1$-$C_{20}$-Alkyl, das gegebenenfalls durch ein oder mehrere, insbesondere ein, zwei oder drei Sauerstoffatome unterbrochen ist, wie Methyl, Ethyl, Propyl,

Isopropyl, Butyl, Isobutyl, sec-Butyl, tert-Butyl, Pentyl, Isopentyl, sec-Pentyl, tert-Pentyl, Hexyl, 2-Methylpentyl, Heptyl, Octyl, 2-Ethylhexyl, Isooctyl, Nonyl, Isononyl, Decyl, Isodecyl, Dodecyl, 3,5,5,7-Tetramethylnonyl, Isotridecyl, Pentadecyl, Hexadecyl, Heptadecyl, Octadecyl, Nonadecyl, Eicosyl (die Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217 sowie Band 11, Seiten 435 und 436), 2-Methoxyethyl, 2-Ethoxyethyl, 2-Ethoxypropyl, 3-Ethoxypropyl, 3,6-Dioxaheptyl, 3,6-Dioxaoctyl oder 3,6,9-Trioxadecyl; Phenyl oder durch $C_1$-$C_4$-Alkyl, $C_1$-$C_4$-Alkoxy oder Halogen insbesondere Fluor, Chlor oder Brom, substituiertes Phenyl, wie 2-Methylphenyl, 4-Methylphenyl, 4-Ethylphenyl, 4-Isopropylphenyl, 4-Butylphenyl, 2,4-Dimethylphenyl, 2,6-Dimethylphenyl, 2-Methoxyphenyl, 4-Methoxyphenyl, 4-Ethoxyphenyl, 4-Propoxyphenyl, 4-Isobutoxyphenyl, 2,4-Dimethoxyphenyl, 2,6-Dimethoxyphenyl, 2-Fluorphenyl, 4-Fluorphenyl, 2-Chlorphenyl, 4-Chlorphenyl, 4-Bromphenyl, 2,4-Dichlorphenyl, 2,6-Trichlorphenyl oder 2,4,6-Trichlorphenyl; $C_1$-$C_{20}$-Alkoxy, wie Methoxy, Ethoxy, Propoxy, Isopropoxy, Butoxy, Isobutoxy, sec-Butoxy, Pentyloxy, Isopentyloxy, Hexyloxy, Heptyloxy, Octyloxy, 2-Ethylhexyloxy, Isooctyloxy, Nonyloxy, Isononyloxy, Decyloxy, Isodecyloxy, Undecyloxy, Dodecyloxy, Isotridecyloxy, Tetradecyloxy, Pentadecyloxy, Hexadecyloxy, Heptadecyloxy, Octadecyloxy, Nonadecyloxy oder Eicosyloxy; Halogen, wie Fluor, Chlor oder Brom; oder den Rest $Si(C_1$-$C_6$-$Alkyl)_3$, wie Trimethylsilyl, Triethylsilyl, Tripropylsilyl, Triisopropylsilyl, Tributylsilyl, Tripentylsilyl oder Trihexylsilyl.

Bevorzugt sind solche Phthalo-naphthalocyanine der Formel I in der M den Rest VO ClAl bedeutet.

Insbesondere bevorzugt sind Phthalo-naphthalocyanine der Formel I, in der Pc einen Phthalocyaninrest, in dem 2 oder 3 Isoindoluntereinheiten benzoanelliert sind, M den Rest VO und $R^1$ verzweigtes $C_4$-$C_{12}$-Alkyl, $C_4$-$C_{12}$-Alkoxy oder den Rest $Si(C_1$-$C_4$-$Alkyl)_3$ bedeuten.

Weiterhin bevorzugt sind Phthalo-naphthalocyanine der Formel I, in der m und n gleich oder verschieden sind und unabhängig voneinander jeweils 0, 1 oder 2 bedeuten.

Insbesondere bevorzugt sind Phthalo-naphthalocyanine der Formel I, in der m 1 oder 2 und n 0 bedeuten.

Die erfindungsgemäßen gemischten Phthalo-naphthalocyanine können nach an sich bekannten Methoden, wie sie bei der Herstellung von Phthalocyaninen oder Naphthalocyaninen zur Anwendung kommen und wie sie beispielsweise in F.H. Moser, A.L. Thomas "The Phthalocyanines", CRC Press, Boca Rota, Florida, 1983, beschrieben sind, erhalten werden.

Als Ausgangsprodukte dienen Mischungen von entsprechenden Phthalo-und Naphthaloderivaten. Beispielsweise seien die Dinitrile (IIa und IIb), Diiminoisoindoline (IIIa und IIIb), Imide (IVa und IVb) oder Carbonsäureanhydride (Va und Vb) genannt:

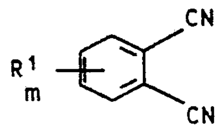

IIa

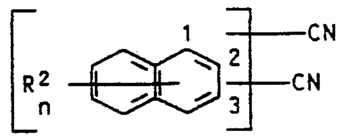

IIb

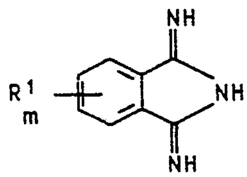

IIIa

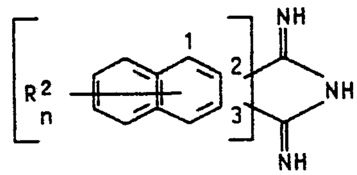

IIIb

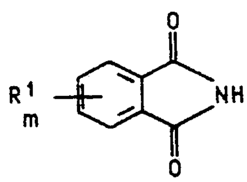

IVa

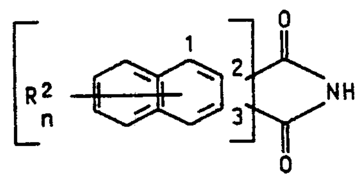

IVb

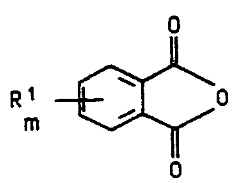

Va

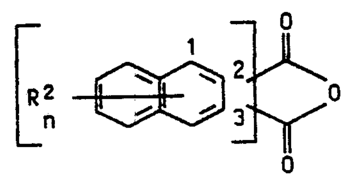

Vb

Analog den Phthaloderivaten der Formeln IIa bis Va sind dabei bei den Naphthaloderivaten der Formeln IIb bis Vb die zur (Na)phthalocyaninbildung befähigten Substituenten jeweils orthoständig (Position 1,2 oder 2,3) verknüpft.

In den Mischungen der Ausgangskomponenten liegen die jeweiligen Phthalo-und Naphthaloderivate im Molverhältnis 1:10 bis 10:1, vorzugsweise 1:5 bis 1:1 vor.

Zweckmäßig bereitet man eine Schmelze aus jeweils einem der Phthal-und Naphthalsäurederivate II bis V und den entsprechenden Metallen oder Metallsalzen, gegebenenfalls in Gegenwart von Harnstoff.

Dazu werden beispielsweise Gemische, die je Gewichsteil Phthalodinitril-Napthalodinitril-Gemisch, 0,2 bis 0,5 Gewichtsteile eines Oxids oder Halogenids, das sich von Kupfer, Nickel, Mangan, Eisen, Zink, Blei, Wismut, Aluminium, Silicum oder Vanadium ableitet, und 0 bis 1 Gewichtsteil Harnstoff enthalten, während 2 bis 10 Stunden auf 200 bis 300°C erhitzt. Den Reaktionsmischungen können weiterhin Katalysatoren, z.B. Ammoniummolybdate beigegeben werden.

Nach dem Erkalten wird das Rohprodukt mit Säure, üblicherweise verwendet man 10 gew.%ige Salzsäure, und anschließend mit wäßriger Lauge, üblich ist beispielsweise 10 gew.%iges Ammoniak, ausgekocht, wobei die Verunreinigungen in Lösung gehen. Gegebenenfalls kann man das Rohprodukt hiernach mit Methanol ein weiteres Mal auskochen. Das so erhaltene Produkt wird üblicherweise getrocknet.

Das Rohprodukt kann aber auch in Schwefelsäure gelöst und so von den in ihm enthaltenen, in Schwefelsäure unlöslichen Verunreinigungen durch Filtrieren oder Zentrifugieren abgetrennt werden. Anschließend gießt man die schwefelsaure Produktlösung in Eiswasser, wobei das Produkt ausfällt. Das ausgefallene Produkt wird filtriert oder zentrifugiert und so lange mit Wasser gewaschen, bis das Waschwasser neutral reagiert. Anschließend wird das Produkt getrocknet.

Dies so vorgereinigte Produkt wird durch Extraktion mit Halogenkohlenwasserstoffen, wie Methylenchlorid weitergereinigt und kann durch säulenchromatographische Methoden schließlich in eine hochreine Form übergeführt werden.

Die metallfreien Pthalo-napthalocyanine der Formel I (M = zweimal Wasserstoff können nach den üblichen, an sich bekannten Methoden, z.B. durch Behandlung der entsprechenden Zinkverbindungen mit Schwefelsäure erhalten werden.

Die neuen gemischten Phthalo-naphthalocyanine der Formel I weisen im nahen Infrarot eine hohe molare Absorption auf. Sie bilden homogene, amorphe Schichten und/oder lassen sich in Farbstoff-in-Polymer-Schichten vorteilhaft einarbeiten.

Die Erfindung betrifft weiterhin dünne strahlungsempfindliche Beschichtungsfilme, enthaltend einen Träger und eine gegenüber Strahlung empfindliche Schicht, wobei die gegenüber Strahlung empfindliche Schicht ein gemischtes Phthalo-naphthalocyanin der Formel I enthält.

Als weitere Komponente der dünnen Beschichtungsfilme kommen Polymerisate in Betracht, welche mit den Verbindungen der Formel I verträglich sind. Solche Polymerisate werden im allgemeinen als Bindemittel bezeichnet.

Beispiele geeigneter Bindemittel sind Polystyrole, Polyester, Polyacrylate, Polymethacrylate, Polycarbonate, Polyamine, Polyvinylalkohole, Polyvinylchloride, Copolymere von Vinylchlorid und Vinylacetat oder flüssigkristalline Seitengruppen enthaltende Polymerisate oder Copolymerisate gemäß der EP-A-90 282 und EP-A-171 045.

Darüber hinaus können die Filme weitere geeignete Zusatzstoffe, wie niedermolekulare flüssigkristalline Verbindungen enthalten.

Bevorzugt sind solche Filme, die nur aus den gemischten Phthalo-naphthalocyaninen der Formel I bestehen und wobei die Farbstoffe in amorphem Zustand vorliegen.

Der Begriff "amorph" gibt dabei an, daß der Beschichtungsfilm keine anisotropen Bereiche aufweist, die größer sind als ein Bruchteil der thermisch veränderten Bereiche, sondern daß er in der Größenordnung von ca. 30 nm und darüber optisch isotrop ist.

Im allgemeinen beträgt die Dicke der Filme 50 bis 160 nm, vorzugsweise 80 bis 140 nm und insbesondere 100 bis 130 nm.

Vorzugsweise absorbieren die in den erfindungsgemäßen Beschichtungsfilmen enthaltenen Farbstoffe Laserlicht, insbesondere Laserlicht relativ langer Wellenlänge (650 bis 900 nm).

Bevorzugt sind solche Beschichtungsfilme, die auf einem scheibenförmigen Träger, gegebenenfalls mit einer Reflektorschicht, aufgebracht sind, und die das Schreiben und die Weidergabe von Informationen mittels eines Halbleiterlasers ermöglichen.

Ein so aufgebauter optischer Speicher kann eine Information hoher Dichte in Form spiraler oder kreisförmig konzentrischer Wege, feiner Löcher oder Vertiefungen (von etwa 1 µm Breite), welche optisch durch Änderung der Reflektivität gegenüber der Umgebung feststellbar sind, aufnehmen. Er zeigt einen guten Kontrast.

Aufgrund der hohen Lichtabsorption der Farbstoffe sind die erfindungsgemäßen Beschichtungsfilme sehr empfindlich gegenüber dem Licht des Halbleiter-Lasers.

Es können auch Laser, die in anderen Wellenlängenbereichen emittieren, angewendet werden. Zweckmäßig mischt man dabei die erfindungsgemäßen Komponenten mit bekannten Farbstoffen, z.B. mit substituierten Dithiolenkomplexen, Azofarbstoffen, Anthrachinonen, Triphenylmethanfarbstoffen, Methinfarbstoffen, Quadratsäurederivaten, Pyrylium-oder Thiopyryliumsalzen.

Der Aufbau der Aufzeichnungsmedien ist an sich bekannt.

Als Träger kommen z.B. Glasplatten oder -scheiben oder Kunststoffplatten oder -scheiben, insbesondere Platten oder Scheiben aus Polymethylmethacrylat, Polystyrol, Polystyrol-Copolymeren, Polyvinylchlorid, Polymethylpenten oder Polycarbonat in Betracht, die gegebenenfalls Spurrillen aufweisen.

Der Träger kann dabei die Form eines Bandes, einer quadratischen oder rechteckigen Platte oder einer runden Scheiben haben, wobei die für laseroptische Aufzeichnungsmaterialien üblichen und bekannten Scheiben eines Durchmessers von 10 oder 13 cm bevorzugt werden.

Darüber hinaus können die Aufzeichnungsmaterialien weitere Schichten, wie Schutzschichten, Haftschichten oder Elektrodenschichten aufweisen.

Neben dem Träger kann weiterhin eine reflektierende Schicht vorhanden sein, so daß das eingestrahlte und durch die farbige Schicht wandernde Licht, so weit es nicht absorbiert wird, an der Reflektorschicht reflektiert wird und nochmals durch die gefärbte Schicht wandert.

Die Belichtung erfolgt bevorzugt durch ein transparentes Substrat. Als Schichtfolge kommt dann in Frage: Substrat-Absorberschicht-(gegebenenfalls Reflektor).

Die lichtreflektierende Schicht sollte dabei so beschaffen sein, daß sie das zur Aufnahme und zur Abtastung verwendete Licht möglichst quantitativ reflektiert. Geeignete lichtreflektierende Materialien sind z.B. Aluminium, Rhodium, Gold, Zinn, Blei, Wismut, Kupfer oder dielektrische Spiegel. Die Dicke der lichtreflektierenden Schicht sollte so groß sein, daß sie das zur Aufnahme oder zum Abtasten benutzte Licht möglichst vollständig reflektiert.

Für diesen Zweck sind Spiegel mit geringer Wärmeleitfähigkeit vorteilhaft. Der Träger oder die Licht reflektierende Schicht müss eine optisch glatte, ebene Oberfläche aufweisen, die so beschaffen sein muß,

daß die absorbierende Schicht fest darauf haftet. Um die Oberflächenqualität und Adhäsionsphänomene günstig zu beeinflussen, kann der Träger und/oder der Reflektor mit einer Glättungsschicht aus einem duroplastischen oder thermoplastischen Material versehen werden.

Sofern die gegenüber Strahlung empfindliche Schicht keine ausreichende mechanische Stabilität aufweist, kann diese mit einer transparenten Schutzschicht überzogen werden. Hierzu bieten sich eine Reihe von Polymeren an, welche durch Aufschleudern, Aufrakeln oder Tauchen von gelösten Polymeren oder durch Aufdampfen im Vakuum, vornehmlich von fluorierten Polymeren, eine Schutzschicht bilden können.

Wenn der Datenspeicher aus zwei gleichen oder verschiedenen Aufzeichnungsmedien in Form eines "Sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz-und/oder Zwischenschichten kann bei ausreichender Qualität des optischen Aufzeichnungsmediums verzichtet werden. Wenn auf Zwischenschichten nicht verzichtet werden kann, muß unter Berücksichtigung des Brechungsindex des dazu verwendeten Materials und der verwendeten Laserlichtwellenlänge deren Schichtdicke so gewählt werden, daß keine störenden Interferenzphänomene auftreten können.

Die erfindungsgemäßen gemischten dünnen Beschichtungsfilme, die die neuen Phthalo-naphthalocyanine enthalten, absorbieren stark bei der Wellenlänge der Halbleiterlaser (ca. 700 bis 850 nm). Die gemischten Phthalonaphthalocyanine können aufgebracht werden, daß sich glatte Absorptionsschichten von optischer Qualität ergeben, in die die zu speichernde Information mit hohem Signal:Rauschen-Verhältnis eingeschrieben werden kann.

Das Aufbringen der Absorptionsmaterialien erfolgt vorzugsweise durch Aufschleudern von gelöstem oder dispergiertem Farbstoff in Gegenwart von Bindemitteln. Auch Rakeln oder Tauchen kommen als Schichtbildungsverfahren in Frage. Das Aufbringen von metallischen Reflektionsschichten erfolgt vorzugsweise durch Aufdampfen im Vakuum oder durch Aufbringen geeigneter Metallfolien auf den Träger.

Für das Aufbringen der Absorptionsschichten aus Lösung bereitet man in einem geeigneten Lösungsmittel, wie Methylenchlorid, Chloroform, Tetrachlorkohlenstoff, Bromoform, Methylchloroform, Aceton, Methylethylketon, Cyclohexanon, Toluol, Acetonitril, Essigester, Methanol oder Mischungen dieser Lösungsmittel, eine Lösung oder gegebenenfalls eine Dispersion des gemischten Phthalo-naphthalocyanins oder Gemischen dieser Verbindungen und des Bindemittels und setzt gegebenenfalls ein Hilfsmittel zu.

Diese Farbstoffzubereitung wird dann durch Rakeln oder Tauchen, vorzugsweise aber durch Aufschleudern ("Spin-coating") auf ein vorher gereinigtes oder vorbehandeltes Substrat ("Subbing-layer") aufgebracht und die Schicht an der Luft getrocknet oder gehärtet. Der Film kann auch im Vakuum bei erhöhter Temperatur, oder gegebenenfalls mit Strahlung getrocknet oder gehärtet werden.

Wie bereits oben ausgeführt, sind solche strahlungsempfindlichen Beschichtungsfilme bevorzugt, die nur aus einer Schicht bestehen, inbesondere solche, bei denen diese Schicht mittels Spin-coating aufgebracht wird.

Je nach Systemaufbau wird zuerst die strahlungempfindliche Schicht und dann der Reflektor aufgebracht oder umgekehrt verfahren. Auf das Aufbringen von Zwischen-und Schutzschichten oder einer reflektierenden Schicht kann, wie bereits oben aufgeführt, gegebenenfalls auch verzichtet werden.

Die erfindungsgemäßen strahlungsempfindlichen Beschichtungsfilme können mittels eines Schreiblaserstrahls mit analogen oder digitalen Daten beschrieben werden, wobei man zum Einschreiben analoger Daten bekanntermaßen einen analog modulierten Dauerstrichlaser und zum Einschreiben digitaler Daten einen impulskodierten Laser verwendet.

Im allgemeinen weisen geeignete Laser bei der Schreibwellenlänge eine Strahlleistung von 1 bis 20 mW auf. Der Fokus-Durchmesser des Schreiblaserstrahls liegt im allgemeinen bei 300 bis 2000 nm. Überlicherweise beträgt die Impulsdauer bei der Bestrahlung mit einem impulscodierten Laser 10 bis 1000 ns. Vorteilhaft verwendet man zum Einschreiben einen Laserstrahl mit Licht einer Wellenlänge, die von der betreffenden Aufzeichnungsschicht gut absorbiert wird. Vorteilhaft sind Wellenlängen von 400 bis 1000 nm.

Beim Schreibvorgang wird der Laserstrahl in relativer Bewegung über das Aufzeichnungsmaterial hinweggeführt und trifft dabei senkrecht auf dieses auf, wobei er auf die Aufzeichnungsschicht fokussiert ist. An der Auftreffstelle wird die Aufzeichnungsschicht lokal erhitzt und es entstehen thermisch veränderte Bereiche, beispielsweise in der Form von Löchern, Kratern oder Flecken. Beim Einschreiben von Daten mit impulskodierten Lasern haben diese Bereiche im wesentlichen eine runde oder ovale Form mit einem Durchmesser von 100 bis 2000 nm. Beim Einschreiben mit einem analog modulierten Dauerstrichlaser können sie beliebige Formen haben.

Die erfindungsgemäßen Beschichtungsfilme eignen sich ausgezeichnet für die ablative und deformative

laseroptische Datenaufzeichnung.

Das Schreiben der Daten in die Aufzeichnungsschicht kann von der dem Träger abgewandten Seite der Schicht her oder durch den optisch klaren Träger hindurch erfolgen. Letzteres ist von besonderem Vorteil.

Die eingeschriebenen Daten werden mit Hilfe eines Leselaserstrahls gelesen. Die Strahlleistung des Leselasers bei der Lesewellenlänge liegt unterhalb der Schwellenleistung, ab der ein Beschreiben möglich wird. Im allgemeinen liegt die Strahlleistung bei 0,1 bis 2 mW. Vorteilhaft verwendet man Laserlicht einer Wellenlänge, die von der Aufzeichnungsschicht stark reflektiert wird. Vorteilhaft ist eine Wellenlänge von 400 bis 1000 nm, insbesondere 630 bis 900 nm.

Auch beim Lesevorgang wird der Leselaserstrahl in relativer Bewegung über das Aufzeichnungsmaterial hinweggeführt und trifft senkrecht auf dieses auf, wobei er auf die Aufzeichnungsschicht fokussiert ist.

Trifft der Leselaserstrahl beim Überstreichen der Aufzeichnungsschicht auf einen thermisch veränderten Bereich, beispielsweise einen Fleck, so ändern sich die Eigenschaften des vom Aufzeichnungsmaterials transmittierten oder reflektierten Lichts, was mit Hilfe geeigneter Detektoren nachgewiesen werden kann.

Dabei kann das Lesen der Daten in der Aufzeichnungsschicht und der dem Träger abgewandten Seite der Schicht her oder durch die optisch klaren, transparenten Träger hindurch erfolgen, wobei letzteres von Vorteil ist. Hierbei ist es besonders vorteilhaft, das reflektierte Licht zu erfassen.

Außerdem ist es von besonderem Vorteil, hierzu Schreib-und Leselaser zu verwenden, die ihre im infraroten Wellenlängenbereich von 630 bis 900 nm ausstrahlen. Dabei ist es außerdem von Vorteil, wenn die Schreibwellenlänge mit der Lesewellenlänge identisch ist oder sich nur wenig von ihr unterscheidet. Licht dieser Wellenlängen wird von üblichen und bekannten Halbleiter-Lasern geliefert.

Die erfindungsgemäßen Beschlichtungsfilme weisen zahlreiche besondere Vorteile auf. So ist ihre unbeschriebene Aufzeichnungsschicht besonders stabil, so daß sie sich selbst nach langer Lagerzeit bei vergleichsweise hoher Temperatur-und Luftfeuchtigkeit noch immer hervorragend für die laseroptische Datenaufzeichnung eignet. Gleiches gilt für die beschriebene Aufzeichnungsschicht; hier tritt selbst bei sehr langer Lagerung kein Informationsverlust ein. Es können daher auch Schreiblaser mit vergleichsweise geringer Lichtleistung verwendet werden. Außerdem weisen die beschriebenen Aufzeichnungsmaterialien einen ganz besonders hohen optischen Kontrast zwischen beschriebenen und unbeschriebenen Bereichen auf, welcher den bisher bekannten optischen Kontrast beschriebener Phthalocyaninschichten übertrifft. Des weiteren wird bei den erfindungsgemäßen Aufzeichnungsmaterialien eine Bitdichte von deutlich über $10^7$ bits/$cm^2$ erreicht, wobei die Daten dann auch noch unmittelbar nach dem Einschreiben gelesen werden können.

Die erfindungsgemäßen gemischten Phthalo-naphthalocyanine der Formel I weisen weitere sehr gute anwendungstechnische Eigenschaften auf und können daher auch für andere Verwendungszwecke dienen. Insbesondere können sie für die Herstellung von IR-Schutzschichten, IR-absorbierenden Folien, Sonnenbrillenbeschichtungen, Beschichtungen für Autowindschutzscheiben, IR-Tinten, Druckfarben für IR-lesebare Streifencodes, Flüssigkristallanzeigen oder IR-Sicherheitssystemen verwendet werden.

Unter IR-lesbaren Streifencodes sind beispielsweise die auf Warenverpackungen angebrachten Streifencodes zu verstehen, welche der genauen Kennzeichnung der Waren dienen.

Unter Flüssigkristallanzeigen oder "Displays" werden die bekannten Anordnungen verstanden, welche Schichtdicken aus flüssig-kristallinen Stoffen enthalten. Diese Schichten ändern bei Anlegen einer elektrischen Spannung lokal ihre optischen Eigenschaften, wodurch z.B. Zahlen, Buchstaben oder Bilder sichtbar dargestellt (angezeigt) werden können.

Unter IR-Sicherheitssystemen werden Anordnungen verstanden, welche im wesentlichen aus einer Laserlichtquelle und einem geeigneten, räumlich weiter davon entfernten Detektor bestehen. Der von der Laserlichtquelle ausgestandte Laserstrahl trifft dabei auf den Detektor und bildet eine sogenannten Lichtschranke. Wird diese unterbrochen, so wird über den Detektor ein Alarm ausgelöst.

Elektrophotographische Aufzeichnungsmaterialien enthalten im wesentlichen Schichten, welche in der Dunkelheit einen hohen elektrischen Widerstand aufweisen, wohingegen sie bei der Belichtung leitfähig werden. Werden solche Schichten in der Dunkelheit an ihrer Oberfläche elektrostatisch aufgeladen und anschließendd bildmäßig belichtet, so wird die elektrostatische Ladung in den belichteten Bereichen abgeleitet und es entsteht ein elektrostatisches Bild, welches mit Hilfe sogenannter Toner sichtbar gemacht werden kann.

Die nachfolgenden Beispiele sollen die Erfindung näher erläutern.

A) Synthese

Allgemeine Herstellvorschrift:

Ein Gemisch aus 0,25 Mol eines o-Naphthalodinitrils, 0,03 Mol eines o-Phthalodinitrils und 0,0625 Mol Aluminiumchlorid oder Vanadinpentoxid oder Vanadium (III) chlorid wurde während 2 Stunden auf 200°C und danach für 3 Stunden auf 250°C erhitzt. Nach dem Erkalten wurde das jeweilige Reaktionsgemisch mit jeweils 200 ml 10 gew.%iger Salzsäure und anschließend nach dem Abtrennen der Salzsäure zunächst mit 200 ml 10 gew.%igem Ammoniakiösung und danach mit 200 ml Methanol ausgekocht, wodurch die löslichen Verunreinigungen aus dem jeweiligen Rohprodukt entfernt wurden.

Nach dem Trocknen wurden aus dem so erhaltenen vorgereinigten Produkt die jeweiligen gemischten Phthalo-naphthalocyanine durch Extraktion mit Methylenchlorid isoliert.

Die resultierenden Gemische wurden durch Säulenchromatographie an neutralem Aluminiumoxid (Aktivitätsstufe 3) mit Toluol, Toluol/Essigsäureethylester (Volumenverhältnis 9:1) oder Methylenchlorid als Eluens weiter gereinigt.

Die stoffliche Zusammensetzung der so erhaltenen Produkte wurde durch die chemische Elementaranalyse ermittelt und entsprach den berechneten Werten.

Die jeweiligen Phthalo-naphthalocyanine wurden anhand ihrer durch Dünnschichtchromatographie an Siliciumdioxid oder Aluminiumoxid ermittelten $R_f$-Werte charakterisiert.

Die nachfolgende Tabelle enthält die jeweils synthetisierten Produkte und ihre $R_f$-Werte.

Die $R_f$-Werte wurden dabei an $Al_2O_3$-Platten der Firma Merck (DC-Alufolien, $F_{254}$, neutral, Typ E, Schichtdicke 0,2 mm) sowie an $SiO_2$-Platten der Firma Macherey und Nagel (Polygram SIL N-HR/$UV_{254}$, 0,2 mm) ermittelt. Als Eluens diente Toluol (A), Toluol-Cyclohexan (9:1 v/v) (B) und Toluol-Aceton (9:1 v/v)-(C).

Bei den Resten $R^1$ und $R^2$ ist unter Me die Methylgruppe, unter t-Bu die tert-Butylgrupe und unter t-$C_8H_{17}$ die 1,1,3,3-Tetramethylbutylgruppe zu verstehen. Die Positionsangabe bezieht sich dabei jeweils auf das der Synthese zugrunde liegende Phthalo-bzw. Naphthalodinitril.

| Verb. Nr. | $R^1$ | $R^2$ | a | M | $SiO_2$ Eluens A | B | C | $Al_2O_3$ Eluens A | B | C |
|---|---|---|---|---|---|---|---|---|---|---|
| 1 | 4-t-$C_8H_{17}$ | H | 1 | VO | 0.14 | 0.08 | 0.95 | 0.17 | 0.13 | 0.90 |
| 2 | 4-t-Bu | H | 1 | VO | 0.12 | 0.06 | 0.9 | 0.12 | 0.08 | 0.9 |
| 3 | 4-$Me_3Si$ | H | 1 | VO | 0.14 | | | 0.12 | | |
| 4 | 4-t-$C_8H_{17}$ | 6-t-Bu | 1 | VO | 0.37 | 0.24 | 0.83 | 0.25 | 0.19 | 0.90 |
| 5 | 4-t-Bu | 6-t-Bu | 1 | VO | 0.44 | 0.29 | 0.91 | 0.17 | 0.13 | 0.95 |
| 6 | 4-$Me_3Si$ | 6-t-Bu | 1 | VO | 0.51 | 0.38 | 0.81 | 0.40 | 0.35 | 0.86 |
| 7 | 4-t-C8$H_{17}$ | 1,4$(OMe)_2$ | 1 | VO | 0.16 | 0.09 | 0.83 | 0.15 | 0.10 | 0.92 |
| 8 | 4-t-Bu | 1,4$(OMe)_2$ | 1 | VO | 0.06 | 0.04 | 0.57 | 0.09 | 0.05 | 0.95 |
| 9 | 4-$Me_3Si$ | 1,4$(OMe)_2$ | 1 | VO | 0.13 | 0.08 | 0.85 | 0.10 | 0.07 | 0.90 |
| 10 | 4-t-Bu | 6-t-Bu | 1 | ClAl | 0,78 | 0,52 | 0.97 | 0.35 | 0.25 | 0.98 |
| 11 | 4-t-$C_8H_{17}$ | H | 2 | VO | 0.41 | 0.28 | 0.95 | 0.34 | 0.30 | 0.90 |
| 12 | 4-t-Bu | H | 2 | VO | 0.18 | 0.18 | 0.9 | | | |
| 13 | 4-$Me_3Si$ | H | 2 | VO | 0.33 | | | 0.28 | | |
| 14 | 4-t-$C_8H_{17}$ | 6-t-Bu | 2 | VO | 0.57 | 0.44 | 0.83 | 0.62 | 0.53 | 0.90 |
| 15 | 4-t-Bu | 6-t-Bu | 2 | VO | 0.56 | 0.45 | 0.91 | 0.34 | 0.26 | 0.95 |
| 16 | 4-$Me_3Si$ | 6-t-Bu | 2 | VO | 0.62 | 0.58 | 0.81 | 0.40 | 0.35 | 0.86 |
| 17 | 4-t-$C_8H_{17}$ | 1,4$(OMe)_2$ | 2 | VO | 0.30 | 0.19 | 0.83 | 0.34 | 0.26 | 0.92 |
| 18 | 4-t-Bu | 1,4$(OMe)_2$ | 2 | VO | 0.28 | 0.16 | 0.57 | 0.15 | 0.11 | 0.95 |
| 19 | 4-$Me_3Si$ | 1,4$(OMe)_2$ | 2 | VO | 0.26 | 0.16 | 0.85 | 0.29 | 0.22 | 0.90 |
| 20 | 4-t-Bu | 6-t-Bu | 2 | ClAl | | | | 0.60 | 0.48 | 0.98 |
| 21 | 4-t-$C_8H_{17}$ | H | 3 | VO | 0.71 | 0.64 | 0.95 | 0.68 | 0.63 | 0.90 |
| 22 | 4-t-Bu | H | 3 | VO | | | | | | |
| 23 | 4-$Me_3Si$ | H | 3 | VO | 0.58 | | | 0.67 | | |
| 24 | 4-t-$C_8H_{17}$ | 6-t-Bu | 3 | VO | 0.76 | 0.70 | 0.83 | 0.82 | 0.77 | 0.90 |
| 25 | 4-t-Bu | 6-t-Bu | 3 | VO | | | | 0.53 | 0.42 | 0.95 |
| 26 | 4-$Me_3Si$ | 6-t-Bu | 3 | VO | 0.76 | 0.72 | 0.81 | 0.71 | 0.61 | 0.86 |
| 27 | 4-t-$C_8H_{17}$ | 1,4$(OMe)_2$ | 3 | VO | 0.51 | 0.35 | 0.83 | | | 0.92 |
| 28 | 4-t-Bu | 1,4$(OMe)_2$ | 3 | VO | 0.57 | 0.42 | 0.57 | | | 0.95 |
| 29 | 4-$Me_3Si$ | 1,4$(OMe)_2$ | 3 | VO | 0.48 | 0.34 | 0.85 | | | 0.90 |
| 30 | 4-t-Bu | 6-t-Bu | 3 | ClAl | | | | 0.70 | 0.60 | 0.98 |

Allgemeine Herstellvorschrift für einen Beschichtungsfilm

1 g Phthalo-naphthalocyanin (s. Verbindungen Nr. 1-30) wurde in 20 ml Toluol bei Raumtemperatur über Nacht gerührt und danach mittels Überdruck durch eine Fritte (P4) gepreßt. Die resultierende Lösung wurde dann mittels einer Spritze auf eine rotierende Scheibe aus Polymethylmethacrylat (Durchmesser 12 cm) aufgetragen. Die Lösung wurde dabei bei einer Drehzahl von 2000 U/min 25 sec lang abgeschleudert und anschließend 35 sec bei einer Drehzahl von 5000 U/min trockengeschleudert. Die erhaltene Schicht war homogen, pin-hole-frei und hochreflektierend.

B) Anwendung

Zum Beschreiben und Lesen der Aufzeichnungsmaterialien, deren Herstellung voranstehend beschrieben ist, wurde ein übliches und bekanntes Meßlaufwerk verwendet. Dieses wies

a) einen impulskodierten Schreiblaser, welcher Licht der Wellenlänge 836 nm mit einer maximalen Schreibleistung von 10 mW aussandte, und

b) einem Leselaser, welcher kontinuierlich Licht der Wellenlänge 780 nm mit einer Leistung von 0,4 bis 1 mW emittierte, auf. Außerdem wies das Meßlaufwerk optische Bauteile auf, mit deren Hilfe die parallelen Laserstrahlen der Laser (a) und (b) kolinear ausgerichtet wurden, um dann mit einem gemeinsamen Objektiv (NA = 0,5) durch die Disks hindurch auf die Aufzeichnungsschichten fokussiert zu werden. Dadurch waren die Auftreffstellen der beiden Laserstrahlen nur um ca. 10 µm voneinander entfernt, so daß ein eingeschriebener Fleck infolge der Plattendrehung bereits wenige µs nach dem Einschreiben den Fokus des Leselasers (b) passierte und detektiert werden konnte.

Zwecks Detektion der Flecke wurde das von den Aufzeichnungsschichten durch die Disks hindurch reflektierte Licht in üblicher und bekannter Weise erfaßt.

Alle Aufzeichnungsmaterialien wurden bei einer Spurgeschwindigkeit von 4 $ms^{-1}$ mittels des Schreiblasers (a) mit kontinuierlichen Pulszügen (1 MHz square ware; Dauer der Einzelpulse: 500 ns) beschrieben. Dabei wurde die Schreibleistung zwischen 1 und 10 mW variiert. Unmittelbar, d.h. wenige µs nach ihrer Aufzeichnung, wurden die erhaltenen Flecke gelesen. Hierbei wurde die Amplitude der durch die Flecke hervorgerufenen Pulse des reflektierten Leselaserlichts gemessen und als Funktion der Schreibleistung, mit welcher der betreffenden Flecke ursprünglich erzeugt worden waren, aufgezeichnet. In dieser Weise wurde ermittelt, ab welcher Schreibleistung unter den oben angegebenen Bedingungen einwandfreie Signale - die Grundvoraussetzung der Datenaufzeichnung - erhalten werden konnten. In allen Fällen war dies ab einer Schreibleistung von 2,5 mW möglich, was die hohe Empfindlichkeit der erfindungsgemäßen Aufzeichnungsmaterialien belegte.

Die Aufzeichnungsmaterialien wurden zehn Wochen lang bei 60°C und einer relativen Luftfeuchtigkeit von 90 % gelagert. Dabei traten keine nachteiligen Veränderungen ein, sondern die aufgezeichneten Daten konnten nach wie vor fehlerfrei gelesen werden.

## Ansprüche

1. Gemischte Phthalo-naphthalocyanine der Formel I

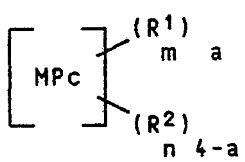

(I),

in der

Pc einen Phthalocyaninrest, in dem 1 bis 3 Isoindoluntereinheiten benzoanelliert sind,

M Kupfer, Nickel, Mangan, Eisen, Zink, Blei, Wismut, zweimal Wasserstoff oder die Reste ClAl, $Cl_2Si$ oder VO,

$R^1$ einen Substituenten an einer nicht benzoanellierten Isoindoluntereinheit,

$R^2$ einen Substituenten an einer benzoanellierten Isoindoluntereinheit, wobei $R^1$ und $R^2$ gleich oder verschieden sind und jeweils unabhängig voneinander für $C_1$-$C_{20}$-Alkyl, in dem die Alkylkette gegebenenfalls durch ein oder mehrere Sauerstoffatome unterbrochen ist, gegebenenfalls substituiertes Phenyl, $C_1$-$C_{20}$-Alkoxy, Halogen oder den Rest $Si(C_1$-$C_6$-$Alkyl)_3$ stehen,

a die Anzahl der nicht benzoanellierten Isoindoluntereinheiten, wobei a für 1 bis 3 steht,

m die Anzahl der Substituenten $R^1$ jeweils an einer nicht benzoanellierten Isoindoluntereinheit, wobei m für 0 bis 4 steht, und

n die Anzahl der Substituenten $R^2$ jeweils an einer benzoanellierten Isoindoluntereinheit, wobei n für 0 bis 6 steht, bedeuten.

2. Gemische Phthalo-naphthalocyanine gemäß Anspruch 1, dadurch gekennzeichnet, daß Pc einen Phthalocyaninrest, in dem 2 oder 3 Isoindoluntereinheiten benzoanelliert sind, M den Rest VO und $R^1$ verzweigtes $C_4$-$C_{12}$-Alkyl, $C_4$-$C_{12}$-Alkoxy oder den Rest $(SiC_1$-$C_4$-$Alkyl)_3$ bedeuten.

3. Dünne strahlungsempfindliche Beschichtungsfilme, enthaltend einen Träger und eine gegenüber Strahlung empfindliche Schicht, dadurch gekennzeichnet, daß die gegenüber Strahlung empfindliche Schicht ein gemischtes Phthalo-naphthalocyanin der Formel I

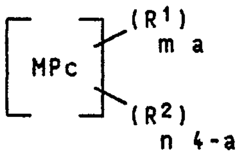

(I)

enthält, in der

Pc einen Phthalocyaninrest, in dem 1 bis 3 Isoindoluntereinheiten benzoanelliert sind,

M Kupfer, Nickel, Mangan, Eisen, Zink, Blei, Wismut, zweimal Wasserstoff oder die Reste ClAl, $Cl_2Si$ oder VO,

$R^1$ einen Substituenten an einer nicht benzoanellierten Isoindoluntereinheit

$R^2$ einen Substituenten an einer benzoanellierten Isoindoluntereinheit, wobei $R^1$ und $R^2$ gleich oder verschieden sind und jeweils unabhängig voneinander für $C_1$-$C_{20}$-Alkyl, in dem die Alkylkette gegebenenfalls durch ein oder mehrere Sauerstoffatome unterbrochen ist, gegebenenfalls substituiertes Phenyl, $C_1$-$C_{20}$-Alkoxy, Halogen oder den Rest $Si(C_1$-$C_6$-$Alkyl)_3$ stehen,

a die Anzahl der nicht benzoanellierten Isoindoluntereinheiten, wobei a für 1 bis 3 steht,

m die Anzahl der Substituenten $R^1$ jeweils an einer nicht benzoanellierten Isoindoluntereinheit, wobei m für 0 bis 4 steht, und

n die Anzahl der Substituenten $R^2$ jeweils an einer benzoanellierten Isoindoluntereinheit, wobei n für 0 bis 6 steht, bedeuten.

4. Dünne strahlungsempfindliche Beschichtungsfilme gemäß Anspruch 3, dadurch gekennzeichnet, daß Pc einen Phthalocyaninrest, in dem 2 oder 3 Isoindoluntereinheiten benzoanelliert sind, M den Rest VO und $R^1$ verzweigtes $C_4$-$C_{12}$-Alkyl, $C_4$-$C_{12}$-Alkoxy oder den Rest $Si(C_1$-$C_4$-$Alkyl)_3$ bedeuten.